# EUROPEAN PATENT APPLICATION

(11) **EP 4 837 811 A1**
(43) Date of publication of application: **11.11.2026**
(21) Application number: 26176426.0
(22) Date of filing: 05.05.2026
(51) Int. Cl.: B61B 12/00, B61B 12/06, G06V 20/52

(54) **CHAIRLIFT SURVEILLANCE METHOD AND CORRESPONDING SYSTEM**

(30) Priority: 05.05.2025 IT 202500009954
(71) Applicant: Lightspeed S.r.l., 67100 L'Aquila (AQ) (IT)
(72) Inventor: Calzavara, Massimo, 33100 Udine (UD) (IT); Calzavara, Marco, 33010 Pagnacco (UD) (IT); Turco, Luca, 33033 Codroipo (UD) (IT)
(74) Representative: Petraz, Gilberto Luigi

(57) **Abstract**

The invention concerns a chairlift (100) surveillance method, comprising the steps of producing a succession of images of a chairlift pod (110) and of carrying out, on said succession of images, the recognition and tracking of a safety bar (114) of said pod (110), as well as a corresponding chairlift (100) surveillance system (10).

## Description

### FIELD OF THE INVENTION

The present invention concerns a chairlift surveillance method and a corresponding surveillance system. In particular, the purpose of the surveillance method and system is to guarantee the safety of chairlift passengers.

### BACKGROUND OF THE INVENTION

Chairlifts installed in ski resorts to transport skiers from the bottom to the top of ski slopes have long been known. These chairlifts are equipped with a plurality of pods that are transported suspended from a moving cable.

The pods usually provide a seat, able to accommodate two, three, or four passengers, depending on their size, attached to the cable by means of a suspension, as well as a safety bar pivoted to the seat and displaceable between a lowered position, in which it is located near the seat, and therefore the passengers, thus acting as a safety element for the passengers, and a raised position, in which it is substantially at the height of the suspension, or just below it, but in any case at a height such as to allow passengers to get off without interfering with them.

The safety bar can be equipped with support members provided to support the passengers' feet, and therefore skis.

For a long stretch in which they are used, chairlifts are suspended from the ground, and the safety of passengers is crucial to avoid any accidents, or prevent them from falling. A crucial aspect is to ensure that the safety bar is properly lowered when the pod leaves the chairlift boarding station.

An example of an information technology solution is known from EP-A-3088272, which discloses a system and method for detecting the position of the safety bar, which are based on analyzing images taken from video cameras positioned in front of, or behind, the pods in the boarding zone. The system and the corresponding method provide to recognize and track the whole pod, define a safety bar presence zone for each pod, and analyze the presence zone so as to determine the safety bar's position.

Another example of a solution is known from WO-A-2012/172198, which discloses a guardrail position detection system based on the pod's profile analysis. In such a system, a video camera is positioned laterally with respect to the trajectory of the pods, so as to film the pod's shape when it passes in front of the video camera's field of view. The system analyzes the image's profile to identify predefined configurations that are considered hazardous, based on discrete states of the guardrail (open, closed, or in intermediate position) and on the presence or absence of a passenger.

One problem with this approach based on lateral profile analysis is that it does not allow to track the pod and its elements continuously along its trajectory over time. In addition, lateral filming involves superimposing passengers' silhouettes, making it difficult or impossible to distinguish them individually and analyze their posture. This approach also requires installing video cameras in specific and predefined positions, as well as setting up background screens to eliminate any visual interference.

One problem of the state of the art lies in the reliability and accuracy of the computer system. In fact, taking the example above, checking for the presence of the safety bar in a predefined presence zone can lead to ambiguity and false detections.

Another problem of the state of the art is that known systems are based on geometric analysis and computer vision algorithms, requiring interventions to calibrate the systems according to heuristic logic and not allowing immediate repeatability of the analysis from one plant to another, without ad hoc calibration interventions.

Yet another problem with known systems is that monitoring the safety bar position only is sometimes not sufficient to ensure the safety of passengers who, for example, can slide on the pod's seat and pass underneath the safety bar, even if it is in its lowered position.

An additional problem with known systems is that they cannot provide detailed information about the composition of the passengers present on each pod, nor identify particular situations that may require specific attention from plant operators.

There is therefore the need to perfect a chairlift surveillance method and system that can overcome at least one of the disadvantages of the state of the art.

To achieve this, it is necessary to solve the technical problem of developing a chairlift surveillance method and system that are effective and easily adaptable to any existing or newly constructed chairlift plant.

One purpose of the present invention is to provide a system and develop a method for the surveillance of chairlifts that allow to detect the position of the safety bar quickly, safely, and reliably, avoiding any ambiguity regarding the detection's outcome.

Another purpose of the present invention is to provide a system and develop a method for the surveillance of chairlifts that are simple and quick to install on any chairlift plant.

Another purpose of the present invention is to provide a system and develop a method for the surveillance of chairlifts that allow to improve passenger safety, in particular when the safety bar is in the lowered safety position.

Another purpose of the present invention is to provide a system and develop a method for the surveillance of chairlifts that allow to give detailed information on the composition of the passengers present on each pod, and to identify particular situations that may require specific attention from plant operators.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to solve the technical problem described above in a new and original way, also achieving considerable advantages compared to the state of the prior art, a chairlift surveillance method according to the present invention comprises the steps of producing a succession of images of a chairlift pod and of carrying out, on the succession of images, the recognition and tracking of a safety bar of the pod.

In accordance with one aspect of the present invention, the method also provides the step of recognizing and tracking at least one fixed element of the pod and/or at least one reference linked to one or more passengers of the pod, and of analyzing the position of the safety bar by measuring a distance between the safety bar and one of either the at least one fixed element of the pod and/or the at least one reference linked to one or more passengers.

A fixed element of the pod is understood as an element thereof that does not move with respect to the pod or its frame. This fixed element can be, in particular, a suspension element, a seat or seating line, the upper edge of the seat backrest, or any element with respect to which the safety bar moves when it is displaced from its raised to its lowered position.

The at least one reference linked to one or more passengers can be the head, shoulder line, hip line, knee line, or foot resting line.

Preferably, the method provides to determine, for the safety bar, one of either the at least one fixed element or the at least one reference linked to one or more passengers, the respective centers of gravity, the measurement of the distance between the safety bar and the suspension element or the at least one reference linked to one or more passengers being done by measuring the distance between their centers of gravity.

Determining the centers of gravity of the recognized elements allows for a precise and unambiguous measurement of the distance between the safety bar and the fixed element or the reference linked to the passengers. This approach differs from known systems based on the analysis of the pod's lateral profile, in which the safety bar is identified in profile, and it is not possible to determine its center of gravity reliably.

According to some embodiments, the method provides to determine a threshold value for the distance and compare the measured distance with the threshold value, so as to verify whether the safety bar is in a safety position or not.

This achieves at least the advantage of avoiding any ambiguity whatsoever in the result of the detection of the safety bar's position. Furthermore, the sensitivity of the determination of the safety bar's position can be modulated by simply adjusting the threshold value.

In accordance with some embodiments of the present invention, the recognition and tracking of the at least one fixed element, of the safety bar and of the at least one reference linked to one or more passengers are performed by means of an artificial intelligence based recognition and tracking module, previously trained for this purpose.

In this way, the method and system can be applied to any chairlift system whatsoever, without requiring heavy calibration and adjustment operations that require a code review.

According to some embodiments, there is provided a step of differentiating between the at least one fixed element and the safety bar, carried out by calculating an aspect ratio for both. The two aspect ratios have different values, which allows the recognition and tracking module to unambiguously distinguish the suspension element from the safety bar.

In accordance with some embodiments of the present invention, the method also provides to carry out the recognition and tracking of one or more passengers present on the pod, and of analyzing the position of their body so as to identify any potential falling hazards. The analysis of the position of a body can be based on the comparison between the positioning of one or more key points of the body with respect to reference lines corresponding to the position of the same key points when the person is normally seated in the pod. The reference lines can coincide with the at least one reference linked to one or more passengers indicated above. This step of recognizing and tracking one or more passengers can be carried out independently of the safety bar's position.

This allows to detect any falling hazards even when the safety bar is in a lowered, safety position.

In accordance with one aspect of the present invention, the video camera is positioned substantially in front of the pods, or in any case in a position that is inclined or offset with respect to their trajectory, so as to allow to display the passengers frontally and track them on a plurality of successive video frames across a predefined distance. This positioning allows to recognize the passengers individually, without their silhouettes being superimposed, and to calculate the centers of gravity of the recognized elements.

The recognition and tracking of one or more passengers is done on a plurality of successive video frames, allowing to monitor the evolution of each passenger's body position over time. This continuous passenger tracking is made possible by the front or inclined positioning of the video camera with respect to the pods' trajectory, which allows to recognize the passengers individually, without their silhouettes being superimposed, unlike known system based on lateral filming.

Advantageously, the one or more body parts can be divided into one or more groups, each of which is assigned a corresponding threshold position.

According to some embodiments, the recognition and tracking of the bodies of one or more passengers is done by means of an artificial intelligence module. This module can be the same module used to recognize and track the suspension element, the safety bar, and the at least one reference linked to one or more passengers, or it can be a second module, equipped with its own artificial intelligence and independent of the first module.

In accordance with another aspect of the present invention, the method can provide to detect, among the one or more passengers, the presence of one or more children, on the basis of the body sizes measured by means of the key points. The method can also provide to verify whether the one or more children are accompanied by at least one adult present in the same pod. In the event an accompanying adult is absent, a selective alarm signal can be activated. This functionality is particularly useful in situations such as the presence of ski schools, in which children can ride the chairlift without an accompanying adult.

According to some embodiments, the detection of a passenger as a child can occur by means of a two-stage process. In a first stage, it is established whether the passenger is seated on the pod's seat by calculating the distance of the hip points with respect to the seating line, the passenger being considered seated if the distance is less than a predefined seated state threshold value. In a second stage, if the passenger is considered to be seated, it is established whether the passenger is a child by comparing the distance of the head point from the seating line with a predefined height threshold value.

According to some embodiments, the method can provide to activate an unaccompanied child alarm when all passengers seated on a pod are classified as children, the alarm being evaluated only after the pod has gone beyond the boarding zone.

According to some embodiments, the method can provide to activate an unaccompanied child bar alarm when all seated passengers are children and simultaneously the safety bar is not in the lowered position. The unaccompanied child bar alarm can be mutually exclusive with a safety bar position alarm.

According to some embodiments, the activation of an alarm can be subject to a temporal voting mechanism comprising a sliding window of a predefined number of video frames and a minimum number of positive votes within said window to activate the alarm. These parameters can be configurable for each type of alarm, so as to prevent spurious activations caused by detection errors on individual video frames.

In accordance with the above purposes and to solve the technical problem described above in a new and original way, also achieving considerable advantages compared to the state of the prior art, a chairlift surveillance system according to the present invention comprises at least one recognition and tracking module and at least one artificial intelligence module connected thereto, configured to implement the method as described above, and connectable to a chairlift's computer system.

Preferably, the surveillance system comprises two artificial intelligence modules, in particular connected to the recognition and tracking module, each configured to perform a respective analysis.

In particular, the at least one recognition and tracking module contains a computer medium containing instructions which, if executed by a processor, result in the implementation of the method as disclosed above.

### DESCRIPTION OF THE DRAWINGS

These and other aspects, characteristics and advantages of the present invention will become apparent from the following description of an embodiment, given as a non-restrictive example with reference to the attached drawings wherein:
- Fig. 1 is a schematic view of a chairlift surveillance system according to the present invention;
- Fig. 2 is a video frame displayable using the system of Fig. 1;
- Figs. 3A and 3B show how the position of the safety bar of a chairlift pod is established;
- Fig. 4 shows how a person is displayed using the system according to the present invention; and
- Figs. 5A and 5B show two examples of how a person's position is assessed using the system according to the present invention.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF AN EMBODIMENT OF THE PRESENT INVENTION

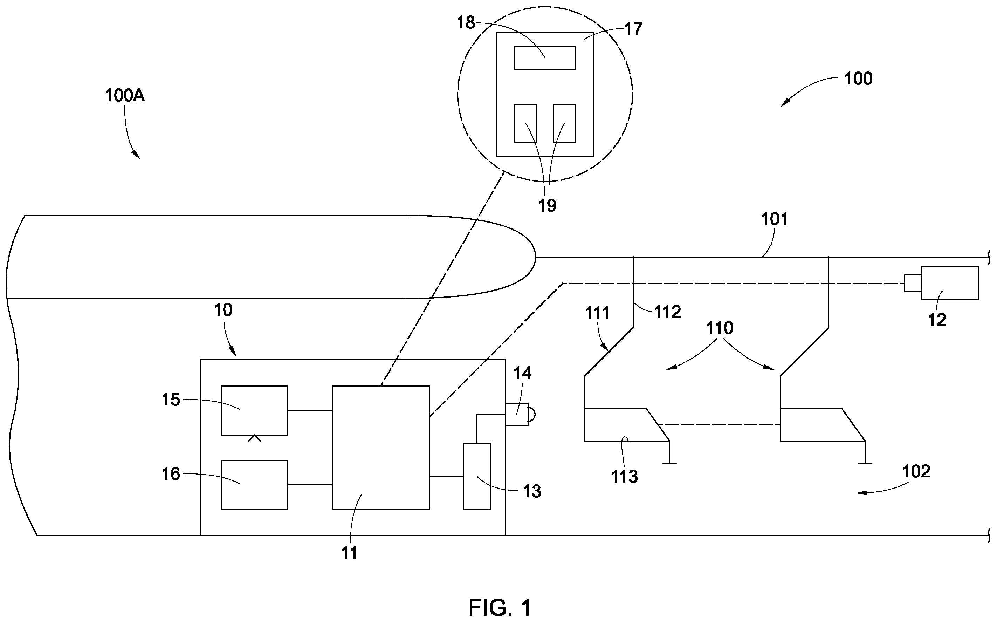

With reference to Fig. 1, a chairlift 100 surveillance system 10 according to the present invention is provided to monitor that the safety conditions of passengers P are satisfied for each pod 101 of the chairlift 100.

In a known manner, the chairlift 100 comprises a plurality of pods 110 of the type suspended on a cable 101 of the chairlift 100, which defines a predefined advancement path A. The cable 101 extends in a closed loop between a boarding station 100A, usually located at the bottom of the ski slopes, and an alighting station, usually located at the top of the ski slopes. In at least one of either the boarding station 100A or the alighting station, there is provided a system for driving the advance of the cable, which is not shown here for simplicity.

Fig. 1 schematically shows a boarding station 100A in which the system 10 according to the present invention is installed.

Each pod 110 comprises a frame 111 equipped at the upper part with a suspension element 112 connected to the cable 101. A seat element 113 is also attached to the frame 111, here a seat configured to accommodate up to four passengers P seated next to each other. The seat 113 can accommodate several passengers P, for example six passengers. These elements do not move with respect to the rest of the pod 110, so they are fixed with respect thereto.

In a known manner, the pod 10 also comprises a safety bar 114, rotatably connected to the frame 111 and oriented parallel to the seat element 113, so as to be usable by all passengers P simultaneously. A pair of support elements 115 for the feet of the passengers P extends from the safety bar 114.

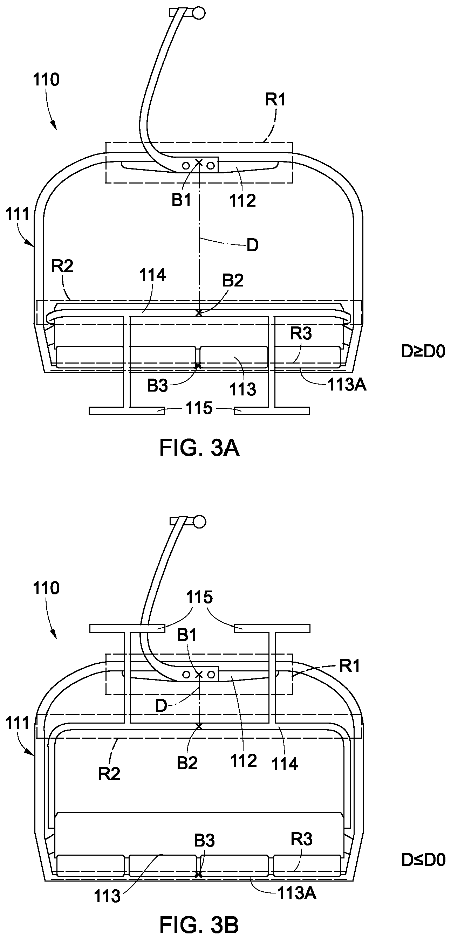

The safety bar 114 is therefore displaceable between a lowered safety position (Fig. 3A), in which it is in front of the passengers and is therefore able to prevent them from falling or in any case act as a gripping element for the passengers P, and a raised position (Fig. 3B), in which it does not interfere with the movements of the passengers P, allowing them to alight freely from the pod 110. When the safety bar 114 is in the lowered position, the foot support elements 115 are positioned below the front edge of the seat 113.

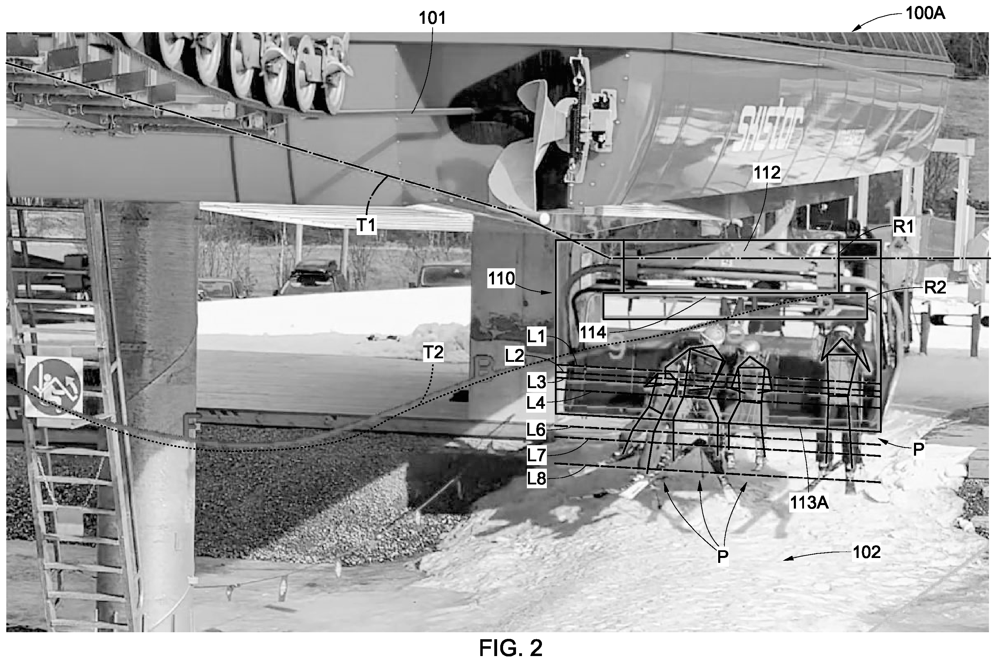

The system comprises a recognition and tracking module 11 configured to analyze images of the pods 110 of the chairlift 100 and to recognize and track the pods 110, as well as other elements such as, for example, the suspension element 112, the seat 113 or a line thereof, the safety bar 114 and the passengers P visible in the images. For example, the recognition and tracking module 11 can be configured to recognize and track a seating line 113A that can correspond, for example, to the front and bottom edge thereof (Figs. 2, 3 and 4).

In particular, the images are video frames acquired using at least one video camera 12, shown here installed substantially in front of the pods 110 when they are in a boarding zone 102, so as to best display the bodies of the passengers P. A possible position of the video camera 12 is in front of the boarding zone 101 and offset laterally with respect to the advancement path A of the pods 110, so as to also be able to follow each pod 110 across a predefined distance, covered across a plurality of video frames (Fig. 2). This frontal or inclined or laterally offset positioning of the video camera 12 with respect to the trajectory of the pods 110 allows to display the passengers P frontally, recognizing them individually without their silhouettes being superimposed, unlike known systems that provide laterally positioned video cameras to analyze the pod's profile.

The recognition and tracking module 11 is equipped with an actuator 13 and an alarm device 14, connected to each other so that the actuator 13 can receive an alarm signal from the recognition and tracking module 11 and consequently actuate the alarm device 14. The latter is of a known type and can be with audible and/or visual signal. The actuator 13 and the alarm device 14 can be connected to each other via cable, while the actuator 13 can be connected to the recognition and tracking module 11 in known wireless modes, or via cable.

The recognition and tracking module 11 is connected to a display device 15, for example a screen, allowing an operator to view the images taken by the video camera 12 in real time. The screen can also display, superimposed on the image, information such as, for example, the results of the analysis of a detail in subsequent video frames, or an alarm signal in the event of a hazardous situation for a passenger P.

The recognition and tracking module 11 is also connected, in the example shown, to a recorder 16, in particular of the digital type, to record the images filmed by the video camera 12.

We must clarify that the video camera 12, screen 15 and recorder 16 may already be present in the boarding station 100A when the system 10 according to the present invention is installed.

Furthermore, a remote server 17 is provided in which at least one service module 18 and at least one artificial intelligence module 19 are provided. Preferably, two artificial intelligence modules 19 are provided in the server 17, as will be explained below. These modules can be provided on the cloud.

The service module 18 comprises a special computer medium containing instructions that, when executed by a computer or processor, allow to perform operations such as, for example, receiving and recording alarms, downloading and remotely saving video frames or videos from the recognition and tracking module 11, or maintaining the recognition and tracking module 11. Maintenance is understood as, for example, updates or fixes to potential problems or bugs. Each artificial intelligence module includes instructions that, when executed by a computer or processor, allow to implement the steps of the method according to the present invention.

In this configuration, it is also advantageous that the interface displayed by the user on the screen 15 is an online hosted application (a so-called web app) viewable by a browser installed on the screen 15. The browser can be configured to read the information in the service module 18, and then display it on the screen 15.

Alternatively, it is also possible to provide that the maintenance module and the at least one artificial intelligence module are physically installed in the boarding station 100A, together with the recognition and tracking module 11.

An example of a video frame obtainable using the video camera 12, and used by the recognition and tracking module 11 to carry out surveillance of the chairlift 100, is shown in Fig. 2.

This video frame shows a pod 110 in its entirety, as well as the passengers P present thereon, which are distinguishable from each other so that their position can be analyzed and monitored independently of the others' position. Furthermore, the frame is wide enough to be able to follow each pod 110 over a relatively long distance, which requires several video frames to be covered by the pod 110, and thus follow the evolution of the detected positions over a predefined period of time.

We must clarify that fig. 2 shows some overlay lines, which are illustrated here to facilitate the understanding of the method but are not necessarily visible on the screen 15 during the normal operation of the surveillance system 10.

The operation of the system 10 described heretofore, which corresponds to the method according to the present invention, comprises the following steps.

In each video frame taken by the video camera 12, the system 10 performs, through the recognition and tracking module 11 and using the at least one artificial intelligence module 19, the recognition of some predetermined elements. Such elements comprise, in the example shown, the suspension element 112, the seating line 113A, the safety bar 114, the bodies of the passengers P, and reference lines L1-L7 for assessing the position of the bodies of the passengers P when they are seated on the pod 110. Obviously, the number of recognized and tracked elements can vary on a case-by-case basis, depending on requirements. We must clarify that the system does not detect the entire pod 110, but only some elements thereof, as explained above.

Specifically, the suspension element 112, the seating line 113A, and the safety bar 114 are recognized. To eliminate any ambiguity between these elements, the recognition and tracking module 11 calculates the aspect ratio of all three, that is, the height/width ratio.

For this operation, the recognition and tracking module 11 determines a rectangle R1, R2, R3 around each of either the suspension element 112, the safety bar 114 or the seating line 113A, and whose sizes are correlated to the shape of the framed element. The recognition and tracking module 11 also calculates the corresponding centers of gravity B1, B2, B3 of the two rectangles R1, R2, R3.

The system 10 has an alarm function correlated to the position of the safety bar 114. In this function, in the example shown, it is provided to measure the distance D between the center of gravity B1 of the rectangle R1 around the suspension element 112 and the center of gravity B2 of the rectangle R2 around the safety bar 114. The result of this measurement is then compared with a threshold value D0 of the distance, this comparison allowing to determine, without any ambiguity, the position of the safety bar 114 between lowered and raised. The threshold value D0 can correspond to any distance whatsoever between the suspension element 112 and an intermediate point between its center of gravity B1 and the center of gravity B2 of the safety bar 114.

In the case shown in Fig. 3A, the distance D is greater than the threshold value D0, which indicates that the safety bar 114 is distant from the suspension element 112, and therefore in the lowered position. In the opposite case, shown in Fig. 3B, the measured distance D is less than the threshold value D0, indicating that the safety bar 114 is close to the suspension element 112, and therefore in the raised position. The distances D and D0, in Figs. 3A and 3B, are measured or determined in pixels.

Since the seating line 113A has also been recognized, the same measurement of the distance between its center of gravity B3 and the center of gravity B2 of the safety bar 114 can be carried out, as an alternative or in addition to the measurement of the distance D as above.

In alternative embodiments, it is possible to establish the position of the safety bar 114 by measuring the distance between its center of gravity B2 and the center of gravity of another element, for example another fixed element of the pod 110, such as the seat 113, or a reference linked to the one or more passengers P, such as for example one of the aforementioned reference lines L1-L7, which will be explained below.

It can be provided that the system will continue to operate continuously in detecting the above-defined elements. It can also be provided that a corresponding safety bar 114 incorrect position alarm only be issued under certain conditions, such as, for example, only if at least one passenger P is present on the pod 110, and as long as the pod is within a predefined zone, which can correspond to the boarding zone 102. The boarding zone 102 can be defined on the video frame by indicating a set of predefined pixels. In this case, it can be established that the alarm can only be issued when the center of gravity B1, B2 of the suspension element 112 and/or of the safety bar 114 is outside this zone.

This function therefore allows to monitor the correct positioning of the safety bar 114 in its safety position when there are passengers P on the corresponding pod 110.

To perform the aforementioned steps, in particular the recognition of the suspension element 112 and of the safety bar 114, the system uses a neural network that, after appropriate training, is able to immediately recognize and identify the two aforementioned elements.

Alternatively, a three-class neural network can also be provided, that is, capable of classifying three distinct categories immediately, always after an appropriate training. In this case, it can be provided, in addition to the suspension element 112 and the safety bar 114, to also use the passenger seating line as another fixed element in order to evaluate the position of the safety bar 114.

The system 10 advantageously provides another function, independent of the function described above, relating to the detection and monitoring of the positioning of the bodies of the passengers P.

As mentioned, the recognition and tracking module 11 is configured to also detect the bodies of the passengers P present in the video frame. The artificial intelligence module is trained to identify, in each body, a set of key points that will be used to analyze the position of the body.

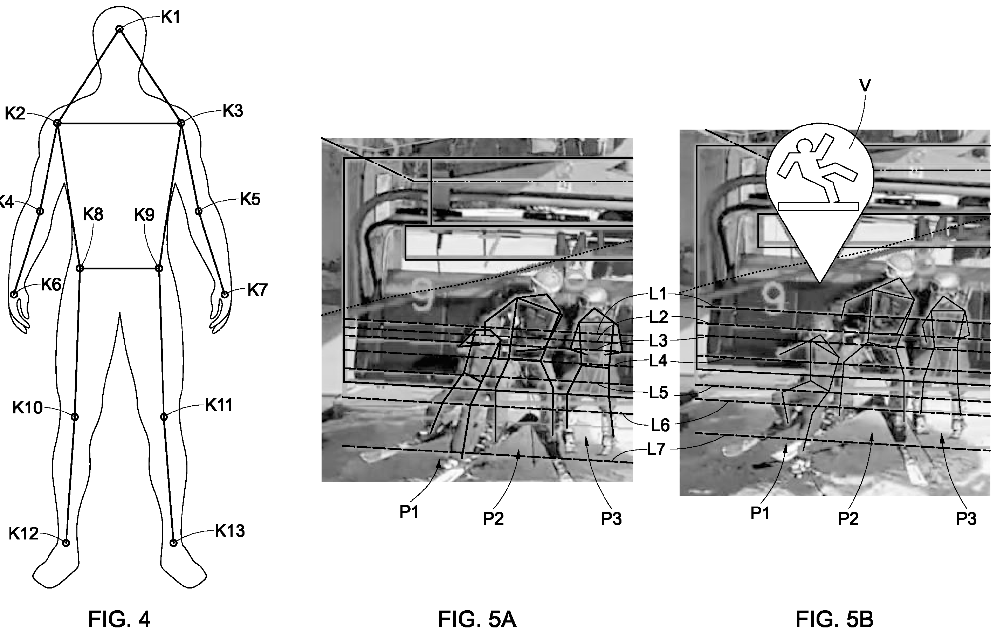

The key points are also defined as joints, and in the example given here there are provided thirteen key points in the body: a head point K1, two right K2 and left K3 shoulder points, two right K4 and left K5 elbow points, two right K6 and left K7 wrist points, two right K8 and left K9 hip points, two right K10 and left K11 knee points, and two right K12 and left K13 ankle points (Fig. 4). Corresponding lines that represent the limbs of the passenger's P body are calculated between these key points.

At the same time, corresponding reference lines L1-L7, each relating to a key point or a pair of key points as above, are established in the pod 110. Specifically, a reference line L1 for the head point K1, a reference line L2 for the two shoulder points K2, K3, a reference line L3 for the two elbow points K4, K5, a reference line L4 for the two wrist points K6, K7, a reference line L5 for the two hip points K8, K9, a reference line L6 for the two knee points K10, K11, and a reference line L7 for the two ankle points K12, K13 (Figs. 2, 5A and 5B) are defined. The reference line L5 can be considered to correspond with the seating line of the corresponding passenger P.

The reference lines L1-L7 are determined in an initial configuration step of the system 10, taking as a reference the positioning of the aforementioned key points K1-K13 of a body seated in a normal way in the pod 110, namely, on the seat 113. The reference lines L1-L7 are taken as the distance from the seat element 113.

When operating, the function provides to monitor the distance of each of the key points K1-K13 from the respective reference line L1-L7. For example, it can be provided to associate a weight (of a mathematical type) with each of the reference lines L1-L7, which weight may depend on the distance of the respective key points. The greater the distance, the greater the weight.

For each video frame, the artificial intelligence module 19 calculates a weighted sum of the seven weights, in order to define a risk score aggregated to a respective passenger P. When configuring the system, a threshold value for the risk score is also defined, on the basis of which the degree of risk of a passenger P falling is calculated. For example, it can be established that the threshold value is 1, which corresponds to the value for which none of the key points K1-K13 are significantly spaced apart from the respective reference line L1-L7.

This operation is repeated for each video frame acquired by the video camera 12. It can be provided that, if a risk score greater than or lower than 1 is detected on a predefined number of subsequent video frames, the activation of an alarm signal is commanded.

This situation is shown in Fig. 5A, in which three passengers P1, P2, P3 are shown, from left to right. The first passenger P1 is represented in an unbalanced position, having partly slid, in which only part of their body (specifically, the left leg) is away from the normal position.

In this case, the weight associated with the reference lines L6, L7 relating to the knees and ankles, respectively, is greater than expected, which results in a risk score, for example, higher than 1, but which does not indicate an immediate danger of the passenger P1 falling. It can therefore be provided that the system monitors the passenger P1 risk score for a number of successive video frames and, once the predefined threshold value with a score other than 1 has been exceeded, the corresponding alarm is activated.

It can also be provided, in addition or as an alternative to the above, that, if the calculated risk score value exceeds a predefined threshold, this corresponds to an immediate risk of falling, and an alarm signal is immediately activated.

A situation of this type is shown in Fig. 5B, in which the same passenger P1 appears in a position that follows a slide from the pod's seat 113, and appears to be about to fall. In this case, almost all key points K1-K13 are away from their normal sitting position. The weight associated with all the reference lines L1-L7 is therefore increased, which results in a very high risk score, in this case higher than the predefined threshold of immediate risk of falling.

As soon as this high risk score value is detected, without waiting for a subsequent video frame, the system 10 activates an alarm signal. It can also be provided that a corresponding visual alarm signal V is displayed on the video frame.

In addition to the above, the system 10 can be configured to distinguish, among the recognized passengers P, the presence of one or more children. This recognition can be made on the basis of the body sizes measured using the key points K1-K13, for example by comparing the distance between the head point K1 and the ankle points K12, K13 with a height threshold value. The system 10 can also check whether the one or more children are accompanied by at least one adult present on the same pod 110 by analyzing the body sizes of the other passengers P present. In the absence of an accompanying adult, the system 10 can activate a selective alarm signal, which can be different from the safety bar 114 position alarm or the fall hazard alarm. This functionality is particularly useful in situations in which there are more children than adults, for example with ski schools, in which children can ride the chairlift without an accompanying adult, allowing operators to specifically monitor such situations.

In more detail, the classification of a passenger P as a child occurs by means of a two-stage process. In a first stage, the system 10 establishes whether the passenger P is physically seated on the seat 113 of the pod 110. This determination can be made by calculating, for each video frame, the distance of the hip points K8, K9 of the passenger P with respect to the seating line 113A. This distance can be compared with a predefined seated state threshold value, which confirms the seated position of the passenger P.

If this distance is less than the predefined seated state threshold value, the passenger P is considered to be seated. This seated state metric is recalculated for each video frame, unlike known approaches in which the seated state is set only once, the instant the person is assigned to the pod.

In alternative embodiments, it can be provided to calculate the signed distance, that is, to provide a sign of the distance with respect to the seating line. For example, considering a substantially vertical axis with an upward positive direction, a positive distance means that the hips are positioned above the seating line 113A, and the passenger P is therefore considered to be seated. Vice versa, considering a substantially vertical axis but with downward positive values, a negative distance indicates that the hips are above the seating line 113A, and therefore that the passenger P is correctly seated.

In a second stage, if it is established the passenger P is seated, the system 10 determines whether the passenger P is a child by comparing the distance of the head, that is, the head point K1, from the seating line 113A with a height threshold value. If the distance of the head from the seating line 113A is less than the threshold value, the passenger P is classified as child.

This two-stage classification allows to prevent any incorrect classifications of people standing near the boarding zone 102.

The system 10 can be configured to activate a first type of selective alarm, referred to as unaccompanied child alarm, when all passengers P seated on a pod 110 are classified as children, that is, when there is no adult accompanying them. This alarm is only assessed after the pod 110 has gone beyond the boarding zone 102, identified by an index configurable in the timeline of the pod's 110 trajectory. The system 10 can also be configured to activate a second type of selective alarm, referred to as unaccompanied child bar alarm, which combines the check on the position of the safety bar 114 with the unaccompanied child condition. This alarm is activated when all passengers P seated are children, and at the same time the safety bar 114 is not in the lowered position.

The two types of alarm related to the safety bar 114, namely, the bar position alarm and the unaccompanied child bar alarm, can be configured as mutually exclusive, that is, a configuration of the system 10 may include one or the other, but not both.

For all types of alarms, it is possible to provide that the system 10 uses a temporal voting mechanism to prevent any spurious activations caused by detection errors on individual video frames. This mechanism provides a sliding window of a predefined number of video frames and a minimum number of positive votes within the window in order to activate the alarm. These two parameters are configurable for every type of alarm.

Preferably, the function of monitoring the position of the safety bar 114 and the function of detecting and monitoring the position of the bodies of the passengers P are each performed by a respective artificial intelligence module 19, that is, independently of each other. In this way, the two artificial intelligences can be different from each other, and can therefore be trained separately and specifically for the corresponding function, to the advantage of a better preparation and greater efficiency of the system 10. Alternatively, it can be provided that the two functions are performed by the same artificial intelligence module 19, in the event there is only one in the system 10.

In addition to the above, the system 10 is configured to analyze the video frames in succession, so as to be able to reconstruct, for example, the trajectories T1, T2 followed or expected over time for the suspension element 112 and the safety bar 114, as shown in Fig. 2. A so-called "motion tracking" of the elements to be monitored is thus achieved, and an expected timeline is created in which the aforementioned elements will move on the scene and the system 10 can perform an analysis over time, video frame by video frame. There is then a tracking of each of the aforementioned elements on the timeline, from boarding the seat to exiting the frame.

This continuous analysis over time differs from known systems that merely detect the position of the pod and its elements in a single predefined position, for example when the pod passes in front of a virtual gate. The tracking of the pod according to the present invention allows instead to evaluate the functional effectiveness of the safety bar in relation to the passenger's posture and behavior during the entire monitored route, not only in a specific position. This allows for a more reliable detection of hazardous situations, in line with the behavior of passengers who often tend to lower the safety bar not at a specific point but along an initial stretch of the route.

In this way, it can also be provided that the system 10 can monitor the distance D between the two corresponding centers of gravity B1, B2 and compare it with an expected, or theoretical, normal operational evolution. In addition, this allows to further increases accuracy in an even more sophisticated manner.

We must clarify that the system 10 can also be trained on configuration parameters and calibrations so that it can "learn" and self-configure. In this way, it can be provided that the system 10 self-configures or improves calibrations based on the frame taken by the video camera 12, so as to always have an optimal operating situation.

It is clear that modifications and/or additions of parts may be made to the surveillance system 10 and to the corresponding method as described heretofore, without thereby departing from the field and scope of the present invention, as defined by the claims.

Another advantage of system 10 according to the present invention is that it can be installed using pre-existing video cameras that film the boarding or alighting area, without requiring the setup of dedicated installations with video cameras in specific positions or background screens. Moreover, the system 10 can be adapted to different station configurations, including top stations where the chairlift arrives by going over a precipice, situations in which known systems based on lateral profile analysis cannot be easily implemented.

It is also clear that, although the present invention has been described with reference to some specific examples, a person of skill in the art will be able to achieve other equivalent forms of chairlift surveillance method and corresponding system, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Chairlift (100) surveillance method, comprising the steps of producing a succession of images of a pod (110) and of carrying out, on said succession of images, the recognition and tracking of a safety bar (114) of said pod (110), **characterized in that** it also provides to recognize and track at least one fixed element (112, 113A) of said pod (110) and/or at least one reference (L1-L7) linked to one or more passengers (P, P1, P2, P3), and to analyze the position of said safety bar (114) by measuring a distance (D) thereof from one of either said at least one fixed element (112, 113A) and/or said at least one reference (L1-L7) linked to one or more passengers (P, P1, P2, P3).

2. Surveillance method as in claim 1, **characterized in that** said at least one fixed element (112, 113A) of said pod (110) is chosen from a suspension element (112) and a seating line (113A) of said pod (110).

3. Surveillance method as in claim 1 or 2, **characterized in that** it provides to determine the center of gravity (B1, B2) of said safety bar (114) and of one of either said at least one fixed element (112, 113A) or said at least one reference (L1-L7) linked to one or more passengers (P, P1, P2, P3), said distance (D) being measured between the two centers of gravity (B1, B2).

4. Method as in claim 1, 2 or 3, **characterized in that** it provides to determine a threshold value (D0) of said distance (D) and compare said measured distance (D) with said threshold value (D0).

5. Method as in any claim hereinbefore, **characterized in that** it provides a step of recognizing and tracking one or more passengers (P, P1, P2, P3) present on said pod (110), and of analyzing the position of their body.

6. Method as in claim 5, **characterized in that** the analysis of the position of a body provides the comparison between one or more key points (K1-K13) of the body with respect to reference lines (L1-L7) corresponding to the position of the same key points (K1-K13) when the person is normally seated in said pod (110).

7. Method as in claim 5 or 6, **characterized in that** said step of recognizing and tracking the safety bar (114) and one of either said at least one fixed element (112, 113A) or said at least one reference (L1-L7) linked to one or more passengers (P, P1, P2, P3), and said step of recognizing and tracking one or more of said passengers (P, P1, P2, P3) are performed by means of two distinct artificial intelligence modules (19).

8. Method as in any claim hereinbefore, **characterized in that** said images are acquired by means of at least one video camera (12) positioned substantially in front of the pods (110) or in a position that is inclined or offset with respect to their trajectory, so as to allow to display the passengers (P, P1, P2, P3) frontally and track them on a plurality of successive video frames across a predefined distance.

9. Method as in any claim from 5 to 8, **characterized in that** it provides to detect, among said one or more passengers (P, P1, P2, P3), the presence of one or more children on the basis of the body sizes measured by means of said key points (K1-K13), and to verify whether said one or more children are accompanied by at least one adult present in the same pod (110).

10. Method as in claim 9, **characterized in that** the detection of a passenger (P) as a child occurs by means of a two-stage process comprising:
- a first stage in which it is established whether the passenger (P) is seated on the seat (113) of the pod (110) by calculating the distance of the hip points (K8, K9) with respect to the seating line (113A), the passenger (P) being considered seated if said distance is less than a predefined seated state threshold value; and
- a second stage in which, if the passenger (P) is considered to be seated, it is established whether the passenger (P) is a child by comparing the distance of the head point (K1) from the seating line (113A) with a height threshold value.

11. Method as in claim 9 or 10, **characterized in that** it provides to activate an unaccompanied child alarm when all passengers (P) seated on said pod (110) are classified as children, said alarm being evaluated only after the pod (110) has gone beyond the boarding zone (102).

12. Method as in claim 11, **characterized in that** it provides to activate an unaccompanied child bar alarm when all seated passengers (P) are children and simultaneously the safety bar (114) is not in the lowered position, said unaccompanied child bar alarm being mutually exclusive with a safety bar (114) position alarm.

13. Chairlift (100) surveillance system (10), comprising a recognition and tracking module (11) and at least one artificial intelligence module (19) connected thereto, said recognition and tracking module (11) and at least one artificial intelligence module (19) being configured to implement the method as in any claim hereinbefore.

14. System (10) as in claim 13, **characterized in that** it comprises two artificial intelligence modules (19) connected to the recognition and tracking module (11), each of said artificial intelligence modules (19) being configured to perform a respective analysis.

15. Computer medium containing instructions which, when executed by a processor, result in the implementation of the method as in any claim from 1 to 12.
